# EUROPEAN PATENT SPECIFICATION

(11) **EP 0 942 018 B1**
(45) Date of publication and mention of the grant of the patent: **12.03.2003**
(21) Application number: 97946160.5
(22) Date of filing: 09.12.1997
(51) Int. Cl.: C08F 220/12, C08F 220/04, C08F 8/12, C08F 297/02

(54) **(METH)ACRYLIC ESTER COPOLYMERS AND PROCESS FOR PRODUCING THE SAME**
(METH)ACRYLESTERCOPOLYMERE UND VERFAHREN ZU IHRER HERSTELLUNG
COPOLYMERES D'ESTER (METH)ACRYLIQUE ET PROCEDE DE PRODUCTION DE CES DERNIERS

(30) Priority: 09.12.1996 JP 34455596; 09.12.1996 JP 34455796
(43) Date of publication of application: 15.09.1999
(73) Proprietor: NIPPON SODA CO., LTD., Chiyoda-ku, Tokyo 100-8165 (JP)
(72) Inventor: MURAMOTO, Hiroo, R+D Lab. Special Chem., Ichihara-shi Chiba 290 (JP); YAMASE, Yukio, R+D Lab. Special Chem., Ichihara-shi Chiba 290 (JP); NOBUHARA, Yukikazu, R+D Lab. Special Chem., Ichihara-shi Chiba 290 (JP); MATSUMOTO, Hitoshi, R+D Lab. Special Chem., Ichihara-shi Chiba 290 (JP); SHIMIZU, Yutaka, R+D Lab. Special Chem., Ichihara-shi Chiba 290 (JP)
(74) Representative: Schmitz, Jean-Marie
(86) International application number: JP9704509
(87) International publication number: WO98025977

(56) References cited:
- JP-A- 4 039 665
- JP-A- 4 173 805
- JP-A- 5 265 212
- JP-A- 6 256 410
- JP-A- 6 266 099
- JP-A- 7 120 927
- JP-A- 8 123 025
- JP-A- 61 176 617
- JP-A- 63 277 218

## Description

### Technological Fields:

The present invention relates to narrow polydispersity (meth)acrylic ester copolymers, and, in more detail, to narrow polydispersity (meth) acrylic ester copolymers having a number-average molecular weight of 1,000 to 50,000, a ratio of weight-average molecular weight (Mw) to number-average molecular weight (Mn), Mw/Mn, of 1.00 to 1.40, and an essential skeleton having at least one segment with a controlled structure comprising (meth)acrylic ester units each having an organic group containing a bulky alicyclic group, and to processes for producing the same. The copolymers of this invention will meet expectations for use as materials for ArF excimer laser resists.

### Background Art

LSI integration has become denser every year. Along with it, there has been demand for finer patterns. Photolithography by light exposure is used for fine processing. A promising candidate for next-generation technologies is excimer lithography using a KrF excimer laser for 256 Mb DRAM which needs 0.25µm rule or an ArF excimer laser for 1Gb DRAM which needs 0.15µm rule. A base resin to be highly transparent as a single-layer resist and excellent in dry etching resistance is essential for a material for ArF excimer laser resists. (Meth)acrylic ester copolymers that have an essential skeleton having at least one segment with a controlled structure comprising (meth)acrylic ester units each having an organic group containing a bulky alicyclic group have attracted attention. Usually such base resins for resists should be copolymers produced with 2 to 4 components including other (meth)acrylic esters and/or (meth)acrylic acid, in order to improve adhesion with a substrate and control alkali solubility, in addition to the aforementioned transparency and dry etching resistance.

Documents, such as Japanese Patent Laid-Opened No. Hei 4-39665, Japanese Patent Laid-Opened No. Hei 5-265212 and J. Photopolym. Sci. Technol. 5 [3], 439 (1992), describe multi-component copolymers that have an essential component comprising (meth)acrylic ester units each having an organic group containing a bulky alicyclic group. However, these conventional copolymers obtained are not unimodal narrow polydispersity copolymers and have a disadvantage that the value of molecular weight distribution, Mw/Mn, is 2 to 5 and very wide. It is difficult to produce a copolymer with a controlled structure in a multi-component system using three or more components. It is also difficult to produce complete block copolymers. In addition, it is necessary to remove non-reacted monomers and by-produced compounds with low molecular weight after polymerization. This is uneconomical and is another problem.

It is an object of this invention to provide random or block (meth) acrylic ester copolymers that have a unimodal narrow molecular weight distribution and an essential skeleton having at least one segment with a controlled structure comprising (meth)acrylic ester units each having an organic group containing a bulky alicyclic group, and processes for producing the same.

### Disclosure of the Invention

The inventors of the present invention have made intensive investigation to achieve the object mentioned above, and have found that a (meth)acrylic ester copolymer that has a unimodal narrow molecular weight distribution and an essential skeleton having at least one segment with a controlled structure comprising (meth)acrylic ester units each having an organic group containing a bulky alicyclic group can be produced by living anion polymerization. This invention has been thus completed.

The present invention is directed to a narrow polydispersity (meth) acrylic ester copolymer which comprises structural units represented by Formulae (I) and (II) 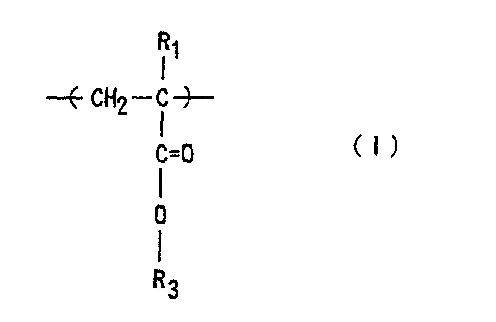 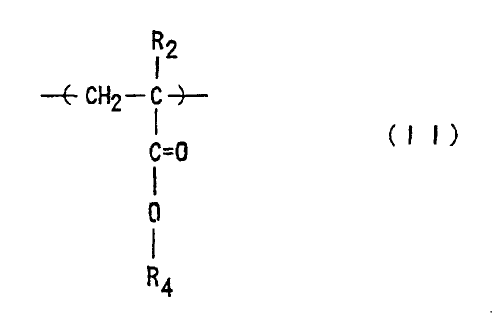 where R₁ and R₂ are each independently hydrogen or methyl; R₃ is an optionally substituted alicyclic group having 7 to 15 carbons or an alkyl group having the said alicyclic group; and R₄ is hydrogen, an optionally substituted alkyl group having 1 to 12 carbons, an optionally substituted alicyclic or heterocyclic group having 3 to 6 carbons or a substituted silyl group having an alkyl and/or aryl group of 1 to 8 carbons, and which has a number-average molecular weight of 1,000 to 50,000, a ratio of weight-average molecular weight (Mw) to number-average molecular weight (Mn), Mw/Mn, of 1.00 to 1.40, and a ratio of the repeating structural units represented by Formula (I) to those of Formula (II) of 1/9 to 9/1. The said copolymer is a random, block or partial block copolymer.

The said copolymer is represented as follows, if it does not have a (meth)acrylic acid segment:

A narrow polydispersity (meth)acrylic ester copolymer which comprises structural units represented by Formulae (I) and (II') 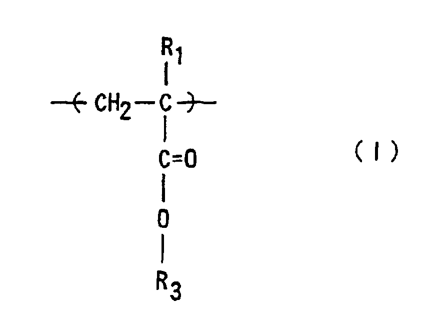 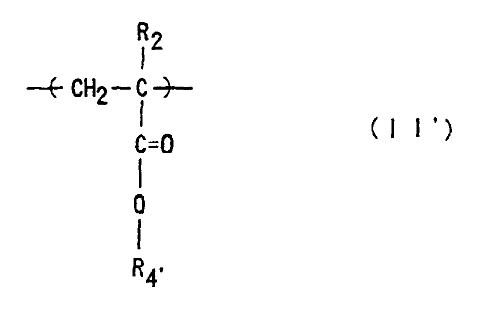 where R₁ and R₂ are each independently hydrogen or methyl; R₃ is an optionally substituted alicyclic group having 7 to 15 carbons or an alkyl group having the said alicyclic group; and R_{4'} is an optionally substituted alkyl group having 1 to 12 carbons, an optionally substituted alicyclic or heterocyclic group having 3 to 6 carbons or a substituted silyl group having an alkyl and/or aryl group of 1 to 8 carbons, and which has a number-average molecular weight of 1,000 to 50,000, a ratio of weight-average molecular weight (Mw) to number-average molecular weight (Mn), Mw/Mn, of 1.00 to 1.40, and a ratio of the repeating structural units represented by Formula (I) to those of Formula (II') of 1/9 to 9/1.

The said copolymer is represented as follows, if it has a (meth)acrylic acid segment as an essential skeleton:

A narrow polydispersity (meth)acrylic ester copolymer which comprises structural units represented by Formulae (I), (II) and (III) 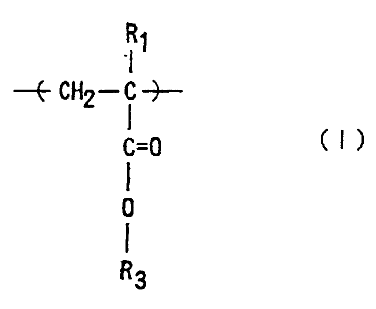 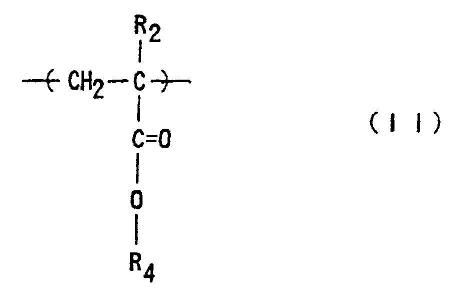 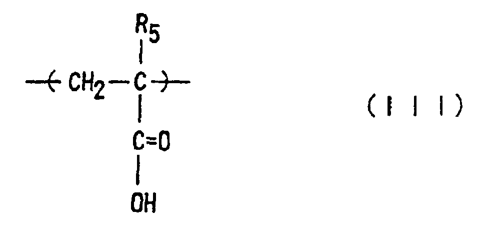 where R₁, R₂ and R₅ are each independently hydrogen or methyl; R₃ is an optionally substituted alicyclic group having 7 to 15 carbons or an alkyl group having the said alicyclic group; and R₄ is hydrogen, an optionally substituted alkyl group having 1 to 12 carbons, an optionally substituted alicyclic or heterocyclic group having 3 to 6 carbons or a substituted silyl group having an alkyl and/or aryl group of 1 to 8 carbons, and which has a number-average molecular weight of 1,000 to 50,000, a ratio of weight-average molecular weight (Mw) to number-average molecular weight (Mn), Mw/Mn, of 1.00 to 1.40, and a ratio of the repeating structural units of Formula (I) to the total of those of Formulae (II) and (III) of 1/9 to 9/1.

The present invention is also directed to a process for producing the said narrow polydispersity (meth)acrylic ester copolymers by living anion polymerization.

The following is a process for the said copolymer without having a (meth)acrylic acid segment:

A process for producing a narrow polydispersity (meth)acrylic ester copolymer, in which a (meth)acrylic ester of Formula (IV) 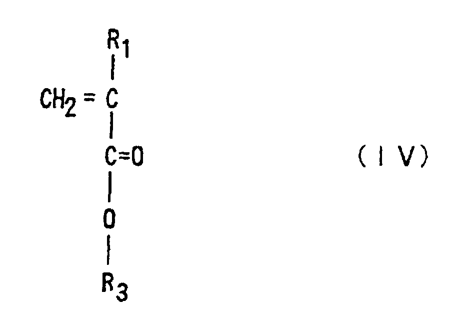 (where R₁ is hydrogen or methyl and R₃ is an optionally substituted alicyclic group having 7 to 15 carbons or an alkyl group having the said alicyclic group)
is copolymerized with a (meth)acrylic ester of Formula (V) 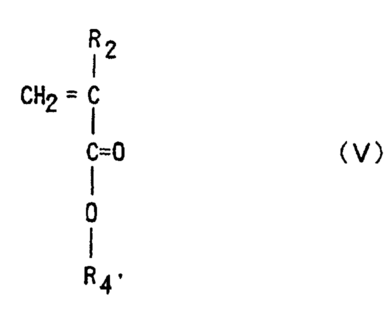 (where R₂ is each independently hydrogen or methyl and R_{4'} is an optionally substituted alkyl group having 1 to 12 carbons, an optionally substituted alicyclic or heterocyclic group having 3 to 6 carbons or a substituted silyl group having an alkyl and/or aryl group of 1 to 8 carbons)
by anion polymerization using an alkali metal or organic alkali metal as an initiator.

The following is a process for the said copolymers with a (meth)acrylic acid segment as an essential skeleton:

A process for producing a narrow polydispersity (meth)acrylic ester copolymer, in which a (meth)acrylic ester of Formula (IV) 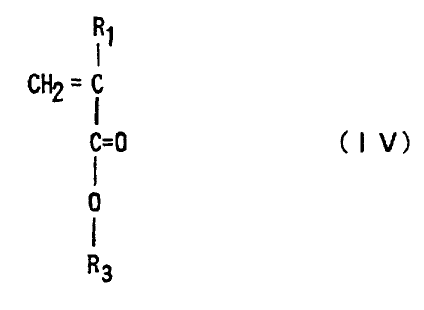 (where R₁ is hydrogen or methyl and R₃ is an optionally substituted alicyclic group having 7 to 15 carbons or an alkyl group having the said alicyclic group)
is copolymerized with a (meth)acrylic ester of Formula (V) 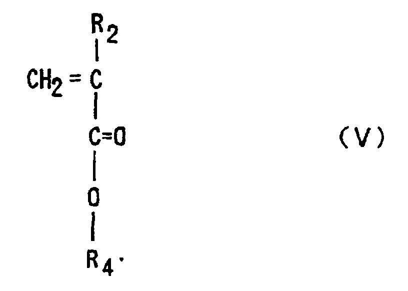 (where R₂ is hydrogen or methyl and R_{4'} is an optionally substituted alkyl group having 1 to 12 carbons, an optionally substituted alicyclic or heterocyclic group having 3 to 6 carbons or a substituted silyl group having an alkyl and/or aryl group of 1 to 8 carbons)
by anion polymerization using an alkali metal or organic alkali metal as an initiator, followed by the hydrolysis of part or the whole of R_{4'}.
with acidic and/or alkaline reagents to introduce a (meth)acrylic acid skeleton into the copolymer chain.

Examples of (meth)acrylic esters of Formula (IV) in this invention include 1-adamantyl acrylate, 1-adamantyl methacrylate, 2-methyl-2-adamantyl acrylate, 2-methyl-2-adamantyl methacrylate, 1-methyleneadamantyl acrylate, 1-methyleneadamantyl methacrylate, 1-ethyleneadamantyl acrylate, 1-ethyleneadamantyl methacrylate, 3,7-dimethyl-1-adamantyl acrylate, 3,7-dimethyl-1-adamantyl methacrylate, isobornyl acrylate, isobornyl methacrylate, tricyclodecanyl acrylate, tricyclodecanyl methacrylate, norbornane acrylate, norbornane methacrylate, menthyl acrylate and menthyl methacrylate. These compounds are used alone or a mixture of two or more.

In the present invention, examples of (meth)acrylic esters of Formula (V), when they have an alkyl group of 1 to 12 carbons, include methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, t-butyl acrylate, t-butyl methacrylate, 2-ethylhexyl acrylate, 2-ethylhexyl methacrylate, isodecyl acrylate, isodecyl methacrylate, isooctyl acrylate, isooctyl methacrylate, lauryl acrylate and lauryl methacrylate;
examples of (meth)acrylic esters having an alicyclic or heterocyclic group of 3 to 6 carbons include cyclohexyl acrylate, cyclohexyl methacrylate, tetrahydrofuranyl acrylate, tetrahydrofuranyl methacrylate, tetrahydropyranyl acrylate, tetrahydropyranyl methacrylate, 3-oxocyclohexyl acrylate, 3-oxocyclohexyl methacrylate, butyrolactone acrylate, butyrolactone methacrylate and mevalonic lactone methacrylate; and
examples of (meth)acrylic esters having a substituted silyl group include trimethylsilyl acrylate, trimethylsilyl methacrylate, isopropyldimethylsilyl acrylate, isopropyldimethylsilyl methacrylate, t-butyldimethylsilyl acrylate, t-butyldimethylsilyl methacrylate, phenyldimethylsilyl acrylate and phenyldimethylsilyl methacrylate.

These compounds are used alone or as a mixture of two or more.

A process for producing the copolymers of the present invention is by reacting the aforementioned (meth)acrylic esters of Formulae (IV) and (V) by anion polymerization using an alkali metal or organic alkali metal as an initiator. Usually a copolymer with a controlled structure and narrow molecular-weight distribution is obtained when polymerization is carried out in organic solvents in the atmosphere of inert gas, such as nitrogen or argon, at a temperature between -100° C and 50° C, preferably between -70° C and 0° C.

Examples of alkali metals for initiators are lithium, sodium, potassium and cesium. Alkyl, allyl and aryl compounds of the alkali metals mentioned above can be used as organic alkali metals. Examples of these compounds include ethyl lithium, n-butyl lithium, s-butyl lithium, t-butyl lithium, ethyl sodium, lithium biphenyl, lithium naphthalene, lithium triphenyl, sodium biphenyl, sodium naphthalene, sodium triphenyl, 1,1-diphenylhexyl lithium and 1,1-diphenyl-3-methylpentyl lithium.

Organic solvents used in this invention are those commonly used in anion polymerization, including aliphatic hydrocarbons such as n-hexane and n-heptane; alicyclic hydrocarbons such as cyclohexane and cyclopentane; aromatic hydrocarbons such as benzene and toluene; ethers such as diethyl ether, tetrahydrofuran and dioxane; and anisole and hexamethylphosphoramide. These are used alone or as a mixture of two or more.

As for a copolymer shape, a random copolymer in which each component is statistically distributed over a copolymer chain, partial block copolymer or complete block copolymer is synthesized, depending on how to add the aforementioned (meth)acrylic esters. For example, a random copolymer is produced by adding a mixture of compounds of the aforementioned Formulae (IV) and (V) to a reaction system for polymerization. A partial block copolymer is produced in a process that one of the compounds is all polymerized, followed by adding a mixture of the other compounds to continue polymerization, or part of one of the compounds is polymerized beforehand and a mixture of both compounds is added to continue polymerization. A complete block polymer is produced by adding compounds of the aforementioned Formulae (IV) and (V) one by one to a reaction system for polymerization.

According to the above processes, narrow polydispersity (meth)acrylic ester copolymers that have any number-average molecular weight in the range between 1,000 and 50,000, a ratio of weight-average molecular weight (Mw) to number-average molecular weight (Mn), Mw/Mn, of 1.00 to 1.40, more preferably 1.00 to 1.30, and a ratio of repeating structural units of Formula (I) to those of Formula (II) of 1/9 to 9/1 can be produced.

A (meth)acrylic acid segment is introduced into a chain of a copolymer produced according to the aforementioned process, by hydrolysis in an organic solvent or a mixture of organic solvents including alcohols such as methanol and ethanol, ketones such as acetone and methyl ethyl ketone, cellosolves such as ethyl cellosolve and halogenated hydrocarbons such as carbon tetrachloride, in addition to the solvents exemplified in the polymerization reactions mentioned above, at a temperature between room temperature and 150° C, with a catalyst of an acidic reagent such as hydrochloric acid, hydrogen chloride gas, sulfuric acid, hydrobromic acid, 1,1,1-trifluoroacetic acid and p-toluenesulfonic acid or an alkaline reagent such as sodium hydroxide, ammonium hydroxide and tetramethyl ammonium hydroxide. In this case, only the (meth)acrylic ester skeleton represented by Formula (II') is hydrolyzed without hydrolyzing the (meth)acrylic ester of Formula (I). The degree of hydrolysis is controlled by choosing such conditions as a type of catalyst, addition amounts, reaction temperature and reaction time, for producing a target (meth)acrylic acid skeleton..

### Most Preferred Embodiment

The present invention is described in more detail in reference to Examples and Comparative Examples. The scope of this invention is not, however, restricted by the following examples.

In Examples, m stands for the total number of the repeating units of the (meth)acrylic ester segment of Formula (I), n is the total number of the repeating units of the (meth)acrylic ester segment of Formula (II') and p is the total number of the repeating units of the (meth)acrylic ester segment of Formula (III).

### Example 1

In a nitrogen atmosphere, 20 mmol of s-butyl lithium was added into 1000 g of tetrahydrofuran (hereinafter abbreviated as THF). 0.5 mol of 1-adamantyl methacrylate (synthesized from 1-adamantanol and methacrylic chloride and purified by distillation) was dropped over 30 minutes in stirring while keeping the temperature at -60° C. The reaction continued for another hour. The reaction completion was confirmed by gas chromatography (hereinafter abbreviated as GC). Then, 0.5 mol of t-butyl methacrylate was dropped over 30 minutes. The reaction continued for another hour. The reaction completion was confirmed by GC.

Methanol was added into the reaction system to terminate the reaction. The reaction solution was poured into a large amount of methanol. The polymer deposited was filtrated, washed and dried at 60° C for 5 hours to give a white powder polymer. The polymerization yield to the total amount of the monomers used was 99.5%. Measurements of the polymer by gel permeation chromatography (hereinafter abbreviated as GPC) showed that it was a narrow polydispersity polymer with Mn = 9,100 and Mw/Mn = 1.15. Its ¹³C-NMR showed a copolymerization ratio, m/n = 25.1/25.3.

Based on the above results, it was confirmed that copolymerization was carried out as designed and a narrow polydispersity block copolymer comprising 1-adamantyl methacrylate and t-butyl methacrylate was obtained.

### Example 2

In a nitrogen atmosphere, 40 mmol of s-butyl lithium was added into 1000 g of THF. Each of 0.4 mol of 1-adamantyl methacrylate (same as that used in Example 1), 0.8 mol of methyl methacrylate and 0.8 mol of t-butyl methacrylate, in this order, was dropped into the reaction system over 30 minutes and stood for an hour, in stirring while keeping the temperature at -60° C. The copolymerization was carried out while confirming the reaction completion by GC at each stage. Methanol was added into the reaction system to terminate the reaction. The reaction solution was poured into a large amount of methanol. The polymer deposited was filtrated, washed and dried at 60° C for 5 hours to give a white powder polymer. The polymerization yield to the total amount of the monomers used was 99.8%.

GPC measurements of the polymer showed that it was a narrow polydispersity polymer with Mn = 7,100 and Mw/Mn = 1. 20. Its ¹³C-NMR showed a copolymerization ratio, m/n = 10.0/40.0.

Based on the above results, it was confirmed that copolymerization was carried out as designed and a narrow polydispersity block copolymer comprising 1-adamantyl methacrylate, methyl methacrylate and t-butyl methacrylate was obtained.

### Example 3

In a nitrogen atmosphere, 10 mmol of s-butyl lithium was added into 1000 g of THF. 0.5 mol of isobornyl methacrylate (a commercial product was purified by distillation for use) was dropped over 30 minutes in stirring while keeping the temperature at -40° C. The reaction continued for another hour. The reaction completion was confirmed by GC. Then, a mixture of 0.2 mol of t-butyl acrylate and 0.2 mol of tetrahydropyranyl methacrylate was dropped over 30 minutes. The reaction continued for another hour. The reaction completion was confirmed by GC.

Methanol was added into the reaction system to terminate the reaction. The reaction solution was poured into a large amount of methanol. The polymer deposited was filtrated, washed and dried at 60° C for 5 hours to give a white powder polymer. The polymerization yield to the total amount of the monomers used was 99.3%. GPC measurements of the polymer showed that it was a narrow polydispersity polymer with Mn = 17,000 and Mw/Mn = 1. 18. Its ¹³C-NMR showed a copolymerization ratio, m/n = 49.8/40.0.

Based on the above results, it was confirmed that copolymerization was carried out as designed and a narrow polydispersity partial block copolymer comprising isobornyl methacrylate, t-butyl acrylate and tetrahydropyranyl methacrylate was obtained.

### Example 4

In a nitrogen atmosphere, 50 mmol of s-butyl lithium was added into 1000 g of THF. A mixture of 0.5 mol of tricycludecanyl methacrylate (a commercial product was purified by distillation for use), 0.5 mol of t-butyl methacrylate and 0.3 mol of tetrahydropyranyl methacrylate was dropped over 30 minutes in stirring while keeping the temperature at -60° C. The reaction continued for another hour. The reaction completion was confirmed by GC.

Methanol was added into the reaction system to terminate the reaction. The reaction solution was poured into a large amount of methanol. The polymer deposited was filtrated, washed and dried at 60° C for 5 hours to give a nutritious, white powder polymer. The polymerization yield to the total amount of the monomers used was 99.3%.

GPC measurements of the polymer showed that it was a narrow polydispersity polymer with Mn = 4,680 and Mw/Mn = 1.10. Its ¹³C-NMR showed a copolymerization ratio, m/n = 10.2/15.9.

Based on the above results, it was confirmed that copolymerization was carried out as expected and a narrow polydispersity random copolymer comprising tricyclodecanyl methacrylate, t-butyl methacrylate and tetrahydropyranyl methacrylate was obtained.

### Example 5

In a nitrogen atmosphere, 40 mmol of s-butyl lithium was added into 1000 g of THF. 0.5 mol of t-butyl methacrylate was dropped over 30 minutes in stirring while keeping the temperature at -60° C. The reaction continued for another hour. The reaction completion was confirmed by GC. Then, a mixture of 0.3 mol of 1-methyleneadamantyl methacrylate (synthesized from 1-adamantane methanol and methacrylic chloride and purified by distillation), 0.3 mol of methyl methacrylate and 0.2 mol of 3-oxocyclohexyl methacrylate was dropped over 30 minutes. The reaction continued for another hour. The reaction completion was confirmed by GC.

Methanol was added into the reaction system to terminate the reaction. The reaction solution was poured into a large amount of methanol. The polymer deposited was filtrated, washed and dried at 60° C for 5 hours to give a white powder polymer. The polymerization yield to the total amount of the monomers used was 99.8%.

GPC measurements of the polymer showed that it was a narrow polydispersity polymer with Mn = 5,280 and Mw/Mn = 1.18. Its ¹³C-NMR showed a copolymerization ratio, m/n = 7.6/25.5.

Based on the above results, it was confirmed that copolymerization was carried out as designed and a narrow polydispersity partial block copolymer comprising t-butyl methacrylate, 1-methyleneadamantyl methacrylate, methyl methacrylate and 3-oxocyclohexyl methacrylate was obtained.

### Example 6

In a nitrogen atmosphere, 10 mmol of n-butyl lithium was added into 1000 g of THF. 0.5 mol of 2-methyl-2-adamantyl methacrylate (synthesized from 2-methyl-2-adamantanol and methacrylic chloride and purified by distillation) was dropped over 30 minutes in stirring while keeping the temperature at -60° C. The reaction continued for another hour. The reaction completion was confirmed by GC. Then, 0.5 mol of t-butyl methacrylate was dropped over 30 minutes. The reaction continued for another hour. The reaction completion was confirmed by GC.

Methanol was added into the reaction system to terminate the reaction. The reaction solution was poured into a large amount of methanol. The polymer deposited was filtrated, washed and dried at 60° C for 5 hours to give a white powder polymer. The polymerization yield to the total amount of the monomers used was 99.8%.

GPC measurements of the polymer showed that it was a narrow polydispersity polymer with Mn = 19, 170 and Mw/Mn = 1. 13. Its ¹³C-NMR showed a copolymerization ratio, m/n = 51.0/50.8.

Based on the above results, it was confirmed that copolymerization was carried out as designed and a narrow polydispersity block copolymer comprising 2-methyl-2-adamantyl methacrylate and t-butyl methacrylate was obtained.

### Example 7

40 mmol of n-butyl lithium and 42 mmol of 1,1-diphenyl ethylene were added into 1000 g of THF in a nitrogen atmosphere in stirring while keeping the temperature at -40° C, to give 1,1-diphenylhexyl lithium. A mixture of 0.5 mol of 1-adamantyl acrylate (synthesized from 1-adamantanol and acrylic chloride and purified by distillation), 0.3 mol of t-butyl methacrylate, 0.3 mol of cyclohexyl methacrylate and 0.3 mol of methyl acrylate was dropped into the reaction system over 30 minutes. The reaction continued for another hour. The reaction completion was confirmed by GC.

Methanol was added into the reaction system to terminate the reaction. The reaction solution was poured into a large amount of methanol. The polymer deposited was filtrated, washed and dried at 60° C for 5 hours to give a white powder polymer. The polymerization yield to the total amount of the monomers used was 98.2%.

GPC measurements of the polymer showed that it was a narrow polydispersity polymer with Mn = 5,900 and Mw/Mn = 1.25. Its ¹³C-NMR showed a copolymerization ratio, m/n = 12.5/22.5.

Based on the above results, it was confirmed that copolymerization was carried out as designed and a narrow polydispersity random copolymer comprising 1-adamantyl acrylate, t-butyl methacrylate, cyclohexyl methacrylate and methyl acrylate was obtained.

### Example 8

In a nitrogen atmosphere, 20 mmol of s-butyl lithium was added. A mixture of 0.5 mol of 2-methyl-2-adamantyl methacrylate, 0.2 mol of t-butyldimethylsilyl methacrylate (synthesized from 1-butyldimethylsilyl chloride and methacrylic acid and purified by distillation) and 0.3 mol of t-butyl methacrylate was dropped over 30 minutes in stirring while keeping the temperature at -60° C. The reaction continued for another hour. The reaction completion was confirmed by GC.

Methanol was added into the reaction system to terminate the reaction. The reaction solution was poured into a large amount of methanol. The polymer deposited was filtrated, washed and dried at 60° C for 5 hours under reduced pressure to give a white powder polymer. The polymerization yield to the total amount of the monomers used was 99.0%.

GPC measurements of the polymer showed that it was a narrow polydispersity polymer with Mn = 10,100 and Mw/Mn = 1.20. Its ¹³C-NMR showed a copolymerization ratio, m/n = 25.1/25.0.

Based on the above results, it was confirmed that copolymerization was carried out as designed and a narrow polydispersity random copolymer comprising 2-methyl-2-adamantyl methacrylate, t-butyldimethylsilyl methacrylate and t-butyl methacrylate was obtained.

### Example 9

10 g of the polymer obtained in Example 1 was dissolved in a mixed solvent of toluene/ethanol (2/1) to make a 20% solution and 1 g of concentrated hydrochloric acid was added to react at 65° C for an hour. The reaction solution was poured into a large amount of water. The polymer deposited was filtrated, washed and dried at 70° C for 5 hours to give 9.7 g of white powder polymer. GPC measurements of the polymer showed Mn = 9,020 and Mw/Mn = 1.15. Its ¹³C-NMR showed a copolymerization ratio, m/n/p = 25.1/21.8/3.6. The acid value was 22.3.

Based on the above results, it was confirmed that a narrow polydispersity partial block copolymer comprising 1-adamantyl methacrylate, t-butyl methacrylate and methacrylic acid was obtained.

### Example 10

10 g of the polymer obtained in Example 3 was dissolved in THF to make a 20% solution and 0.2 g of p-toluenesulfonic acid was added to react at 40° C for an hour. It was confirmed by ¹H-NMR that the tetrahydropyranyl group was completely eliminated. The reaction solution was poured into a large amount of water. The polymer deposited was filtrated, washed and dried at 60° C for 5 hours to give 9.7 g of white powder polymer.

GPC measurements of the polymer showed Mn = 15,880 and Mw/Mn = 1.18. Its ¹³C-NMR showed a copolymerization ratio, m/n/p = 50.0/32. 1/7.7. The acid value was 27.1.

Based on the above results, it was confirmed that a narrow polydispersity partial block copolymer comprising isobornyl methacrylate, t-butyl acrylate and methacrylic acid was obtained.

### Example 11

10 g of the polymer obtained in Example 8 was dissolved in THF to make a 10% solution and a few drops of 2N-hydrochloric acid was added to react at room temperature for 3 hours. It was confirmed by ¹H-NMR that the t-butyldimethylsilyl group was completely eliminated. The reaction solution was poured into a large amount of water. The polymer deposited was filtrated, washed and dried at 60° C for 5 hours under reduced pressure to give 8.7 g of white powder polymer. GPC measurements of the polymer showed Mn = 8,860 and Mw/Mn = 1.20. Its ¹³C-NMR showed a copolymerization ratio, m/n/p = 25.1/15.0/10.0. The acid value was 63.2.

Based on the above results, it was confirmed that a narrow polydispersity random copolymer comprising 2-methyl-2-adamantyl methacrylate, t-butyl methacrylate and methacrylic acid was obtained.

### Comparative Example 1

Into 100 g of toluene were added 11 mmol of azobisisobutyronitrile (hereinafter abbreviated as AIBN) as a radical initiator, 0.1 mol of 1-adamantyl methacrylate and 0.1 mol of t-butyl methacrylate in a nitrogen atmosphere, and polymerized in stirring at 65° C for 5 hours. 5 mmol of AIBN was added. Temperature was raised to 80° C to carry on the reaction for 3 hours and further an hour at 95° C.

The reaction solution was poured into a large amount of methanol. The polymer deposited was filtrated, washed and dried at 60° C for 5 hours to give a white powder polymer. The polymerization yield to the total amount of the monomers used was 91.3%.

GPC measurements of the polymer showed Mn = 8,800, Mw/Mn = 2.8, multi-peaks and a wide molecular-weight distribution.

### Comparative Example 2

Into 100 g of toluene were added 5 mmol of AIBN, 0.1 mol of 1-adamantyl methacrylate, 0.1 mol of methyl methacrylate and 0.1 mol of t-butyl methacrylate in a nitrogen atmosphere and radical polymerization was carried out as did in Comparative Example 1.

The reaction solution was fractionally purified twice with methanol/water and poured into a large amount of methanol. The polymer deposited was filtrated, washed and dried at 60° C for 5 hours to give a white powder polymer. The polymerization yield to the total amount of the monomers used was 82.7%.

GPC measurements of the polymer showed Mn = 20,100, Mw/Mn = 1.6 and a wide molecular-weight distribution with a shoulder at the side of low molecular weight.

### Comparative Example 3

Into 100 g of toluene were added 12 mmol of AIBN and 0.2 mol of isobornyl methacrylate in a nitrogen atmosphere, and polymerized in stirring at 65° C for 5 hours. 0.1 mol of t-butyl methacrylate was added to continue the reaction for 5 hours. 4 mmol of AIBN was further added. Temperature was raised to 80° C to carry on the reaction for 3 hours and further an hour at 95° C.

Non-reacted monomers and compounds with low molecular weight were removed from the reaction solution by fractional purification with methanol/water. Volatile matter was then distilled out under reduced pressure to give a polymer.

GPC measurements of the polymer showed Mw/Mn = 4.8 and multi-peaks. Components in each eluate from fractional GPC were measured by ¹H-NMR. The obtained polymer was a mixture of homopolymers of individual components and copolymers with irregular compositions. It was thus confirmed that the target block copolymer was not produced.

### Comparative Example 4

Into 100 g of toluene were added 15 mmol of azobisisobutylonitrile (hereinafter abbreviated as AIBN) as a radical initiator, 0.1 mol of 1-adamantyl methacrylate, 0.1 mol of t-butyl methacrylate and 0.1 mol of methacrylic acid in a nitrogen atmosphere, and polymerized in stirring at 65° C for 5 hours. 0.3 mmol of AIBN was added. Temperature was raised to 80° C to carry on the reaction for 3 hours and further an hour at 95° C.

The reaction solution was poured into a large amount of methanol. The polymer deposited was filtrated, washed and dried at 60° C for 5 hours to give a white powder polymer. The polymerization yield to the total amount of the monomers used was 92.3%.

GPC measurements of the polymer showed Mn = 9,200, Mw/Mn = 3.1, multi-peaks and a wide molecular-weight distribution.

### Comparative Example 5

Into 100 g of toluene were added 5 mmol of AIBN, 0.1 mol of 1-adamantyl methacrylate, 0.1 mol of methyl methacrylate, 0.1 mol of t-butyl methacrylate and 0.1 mol of acrylic acid in a nitrogen atmosphere and radical polymerization was carried out as did in Comparative Example 1.

The reaction solution was fractionally purified twice with methanol/water and poured into a large amount of methanol. The polymer deposited was filtrated, washed and dried at 60° C for 5 hours to give a white powder polymer. The polymerization yield to the total amount of the monomers used was 81.5%.

GPC measurements of the polymer showed Mn = 23,100, Mw/Mn = 1.7 and a wide molecular-weight distribution with a shoulder at the side of low molecular weight.

### Industrial Use

The present invention provides narrow polydispersity random, block or partial block copolymers of (meth)acrylic esters, which are expected to be used as materials for ArF excimer laser resists. The copolymers have a unimodal narrow molecular-weight distribution and an essential skeleton having at least one segment with a controlled structure comprising (meth)acrylic ester units each having an organic group containing a bulky alicyclic group.

## Claims

1. A narrow polydispersity (meth)acrylic ester copolymer which comprises structural units represented by Formulae (I) and (II) 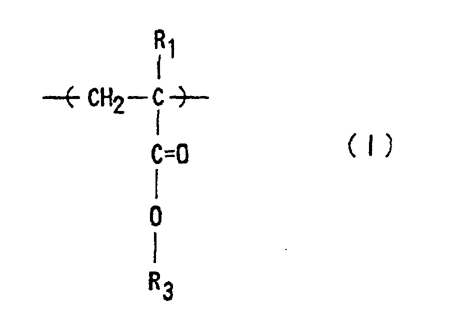 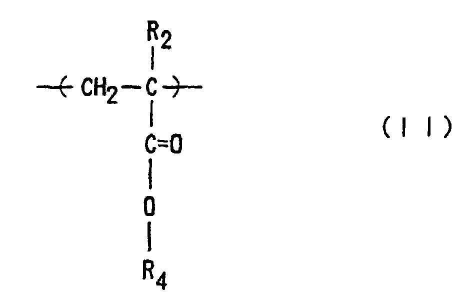 where R₁ and R₂ are each independently hydrogen or methyl; R₃ is an optionally substituted alicyclic group having 7 to 15 carbons or an alkyl group having the said alicyclic group; and R₄ is hydrogen, an optionally substituted alkyl group having 1 to 12 carbons, an optionally substituted alicyclic or heterocyclic group having 3 to 6 carbons or a substituted silyl group having an alkyl and/or aryl group of 1 to 8 carbons, and which has a number-average molecular weight of 1,000 to 50,000, a ratio of weight-average molecular weight (Mw) to number-average molecular weight (Mn), Mw/Mn, of 1.00 to 1.40, and a ratio of the repeating structural units represented by Formula (I) to those of Formula (II) of 1/9 to 9/1.

2. A narrow polydispersity (meth)acrylic ester copolymer according to Claim 1, which comprises structural units represented by Formulae (I) and (II') 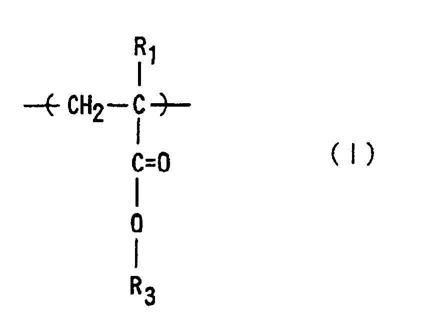 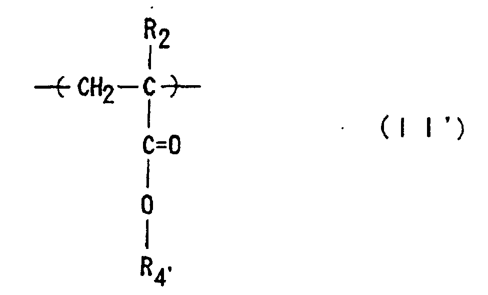 where R₁ and R₂ are each independently hydrogen or methyl; R₃ is an optionally substituted alicyclic group having 7 to 15 carbons or an alkyl group having the said alicyclic group; and R_{4'} is an optionally substituted alkyl group having 1 to 12 carbons, an optionally substituted alicyclic or heterocyclic group having 3 to 6 carbons or a substituted silyl group having an alkyl and/or aryl group of 1 to 8 carbons, and which has a number-average molecular weight of 1,000 to 50,000, a ratio of weight-average molecular weight (Mw) to number-average molecular weight (Mn), Mw/Mn, of 1.00 to 1.40, and a ratio of the repeating structural units represented by Formula (I) to those of Formula (II') of 1/9 to 9/1.

3. A narrow polydispersity (meth)acrylic ester copolymer according to Claim 1, which comprises structural units represented by Formulae (I), (II) and (III) 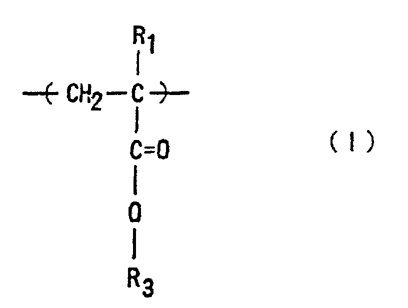 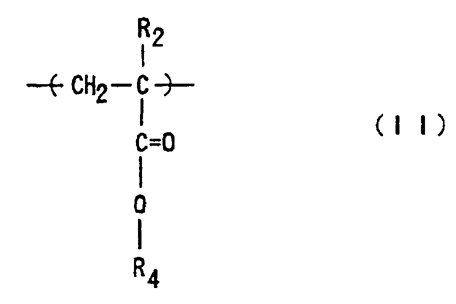 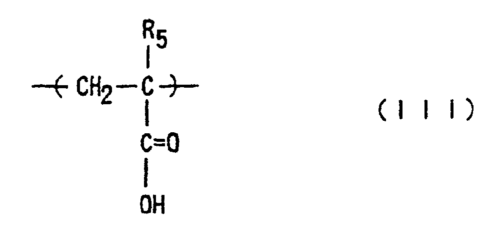 where R₁, R₂ and R₅ are each independently hydrogen or methyl; R₃ is an optionally substituted alicyclic group having 7 to 15 carbons or an alkyl group having the said alicyclic group; and R₄ is hydrogen, an optionally substituted alkyl group having 1 to 12 carbons, an optionally substituted alicyclic or heterocyclic group having 3 to 6 carbons or a substituted silyl group having an alkyl and/or aryl group of 1 to 8 carbons, and which has a number-average molecular weight of 1,000 to 50,000, a ratio of weight-average molecular weight (Mw) to number-average molecular weight (Mn), Mw/Mn, of 1.00 to 1.40, and a ratio of the repeating structural units of Formula (I) to the total of those of Formulae (II) and (III) of 1/9 to 9/1.

4. A narrow polydispersity (meth)acrylic ester copolymer according to Claims 1 to 3, in which the copolymer is a random copolymer.

5. A narrow polydispersity (meth)acrylic ester copolymer according to Claims 1 to 3, in which the copolymer is a block copolymer.

6. A narrow polydispersity (meth)acrylic ester copolymer according to Claims 1 to 3, in which the copolymer is a partial block copolymer.

7. A process for producing a narrow polydispersity (meth)acrylic ester copolymer according to Claim 2, in which a (meth)acrylic ester of Formula (IV) 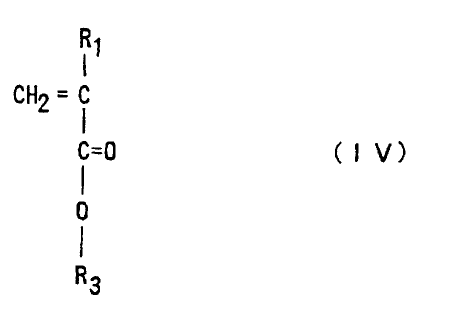 (where R₁ is hydrogen or methyl, R₃ is an optionally substituted alicyclic group having 7 to 15 carbons or an alkyl group having the said alicyclic group)
is copolymerized with a (meth)acrylic ester of Formula (V) 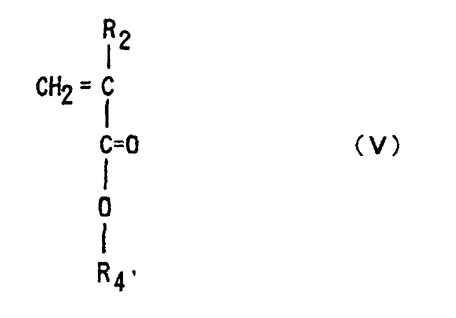 (where R₂ is each independently hydrogen or methyl, R_{4'} is an optionally substituted alkyl group having 1 to 12 carbons, an alicyclic or heterocyclic group having 3 to 6 carbons or a substituted silyl group having an alkyl and/or aryl group of 1 to 8 carbons),
by anion polymerization using an alkali metal or organic alkali metal as an initiator.

8. A process for producing a narrow polydispersity (meth)acrylic ester copolymer according to Claim 3, in which a (meth)acrylic ester of Formula (IV) 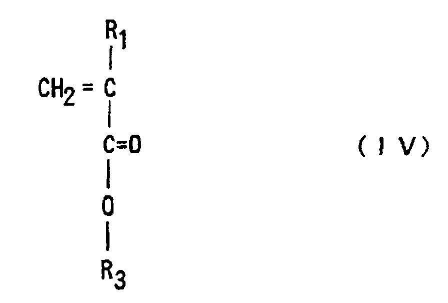 (where R₁ is hydrogen or methyl, R₃ is an optionally substituted alicyclic group having 7 to 15 carbons or an alkyl group having the said alicyclic group)
is copolymerized with a (meth)acrylic ester of Formula (V) 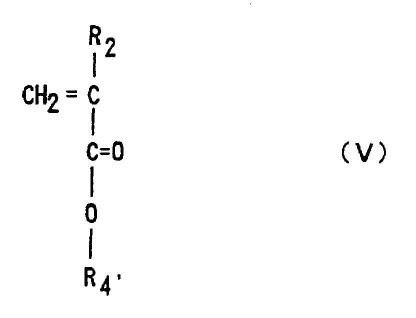 (where R₂ is hydrogen or methyl, R_{4'}, is an optionally substituted alkyl group having 1 to 12 carbons, an optionally substituted alicyclic or heterocyclic group having 3 to 6 carbons or a substituted silyl group having an alkyl and/or aryl group of 1 to 8 carbons),
by anion polymerization using an alkali metal or organic alkali metal as an initiator, followed by the hydrolysis of part or the whole of R_{4'}. with acidic and/or alkaline reagents to introduce a (meth)acrylic acid skeleton into the copolymer chain.

## Patentansprüche

1. (Meth)acrylsäureestercopolymer mit enger Polydispersität, das strukturelle Einheiten umfaßt, dargestellt durch Formeln (I) und (II) 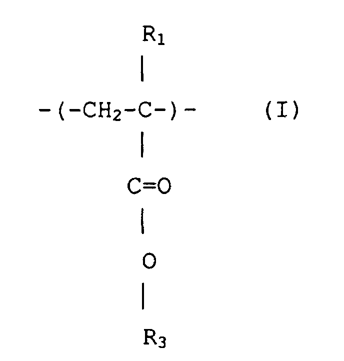 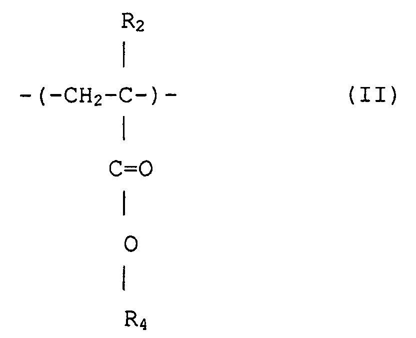 wobei R₁ und R₂ jeweils unabhängig Wasserstoff oder Methyl sind; R₃ ist eine wahlfrei substituierte alizyklische Gruppe mit 7 bis 15 Kohlenstoffen oder eine Alkylgruppe mit der alizyklischen Gruppe, und R₄ ist Wasserstoff, eine wahlfrei substituierte Alkylgruppe mit 1 bis 12 Kohlenstoffen, eine wahlfrei substituierte alizyklische oder heterozyklische Gruppe mit 3 bis 6 Kohlenstoffen oder eine substituierte Silylgruppe mit einer Alkyl und/oder Arylgruppe mit 1 bis 8 Kohlenstoffen, und das ein Molekulargewicht-Zahlenmittel von 1000 bis 50 000, ein Verhältnis von massegmittelter Molekülmasse (Mw) zu Molekulargewicht-Zahlenmittel (Mn), Mw/Mn von 1,00 bis 1,40 und ein Verhältnis der sich wiederholenden Struktureinheiten, dargestellt durch Formel (I), zu denjenigen von Formel (II) von 1/9 bis 9/1 hat.

2. (Meth)acrylsäureestercopolymer mit enger Polydipersität nach Anspruch 1, das Struktureinheiten umfaßt, dargestellt durch Formeln (I) und (II') 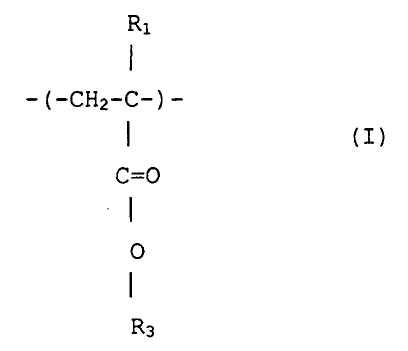 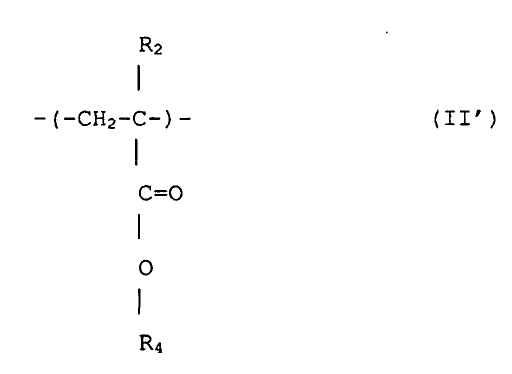 wobei R₁ und R₂ jeweils unabhängige Wasserstoff oder Methyl sind; R₃ ist eine wahlfrei substituierte alizyklische Gruppe mit 7 bis 15 Kohlenstoffen oder eine Alkylgruppe mit der alizyklischen Gruppe, und R₄ ist eine wahlfrei substituierte Alkylgruppe mit 1 bis 12 Kohlenstoffen, eine wahlfrei substituerte alizyklische oder heterozyklische Gruppe mit 3 bis 6 Kohlenstoffen oder eine substituierte Silylgruppe mit einer Alkyl und/oder Arylgruppe mit 1 bis 8 Kohlenstoffen, und das ein Molekulargewicht-Zahlenmittel von 1000 bis 50 000, ein Verhältnis von massegemittelter Molekülmasse (Mw) zu Molekulargewicht-Zahlenmittel (Mn), Mw/Mn, von 1,00 bis 1,40 und ein Verhältnis der sich wiederholenden Struktureinheiten, dargestellt durch Formel (I), zu denjenigen von Formel (II') von 1/9 bis 9/1 hat.

3. (Meth)acrylsäureestercopolymer mit enger Polydispersität nach Anspruch 1, das Struktureinheiten umfaßt, dargestellt durch Formeln (I), (II) und (III) 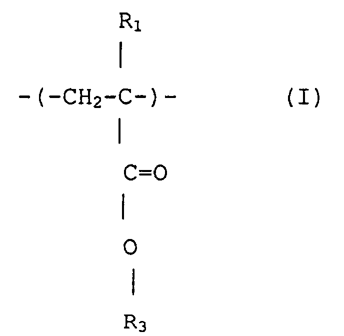 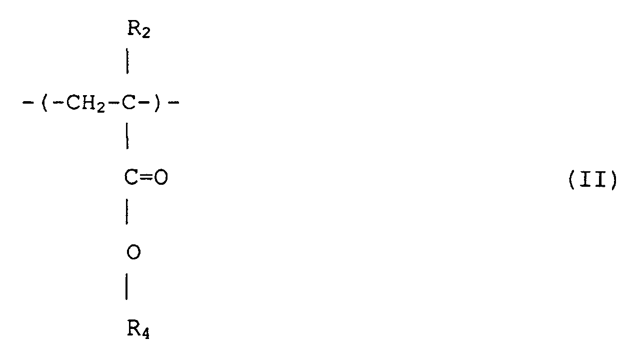 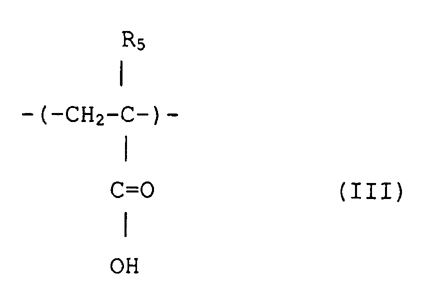 wobei R₁, R₂ und R₃ jeweils unabhängig Wasserstoff oder Methyl sind, R₃ ist eine wahlfrei substituierte alizyklische Gruppe mit 7 bis 15 Kohlenstoffen oder eine Alkylgruppe mit der alizyklischen Gruppe, und R₄ ist Wasserstoff, eine wahlfrei substituierte Alkylgruppe mit 1 bis 12 Kohlenstoffen, eine wahlfrei substituierte alizyklische oder heterozyklische Gruppe mit 3 bis 6 Kohlenstoffen oder eine substituierte Silylgruppe mit einer Alkyl und/oder Arylgruppe mit 1 bis 8 Kohlenstoffen, und die ein Molekulargewicht-Zahlenmittel von 1000 bis 50 000, ein Verhältnis von massegemittelter Molekülmasse (Mw) zu Molekulargewicht-Zahlenmittel (Mn), Mw/Mn, von 1,00 bis 1,40 und ein Verhältnis der sich wiederholenden Struktureineiten von Formel (I) zu insgesamt denjenigen von Formeln (II) und (III) von 1/9 bis 9/1 hat.

4. (Meth)acrylsäureestercopolymer mit enger Polydispersität nach Ansprüchen 1 bis 3, wobei das Copolymer ein zufälliges Copolymer ist.

5. (Meth)acrylsäureestercopolymer mit enger Polydispersität nach Ansprüchen 1 bis 3, bei dem das Copolymer ein Blockcopolymer ist.

6. (Meth)acrylsäureestercopolymer mit enger Polydispersität nach Ansprüchen 1 bis 3, bei dem das Copolymer ein Teilblockcopolymer ist.

7. Verfahren zum Herstellen eines (Meth)acrylsäureestercopolymeren mit enger Polydispersität nach Anspruch 2, wobei ein (Meth)acrylsäureester von Formel (IV) 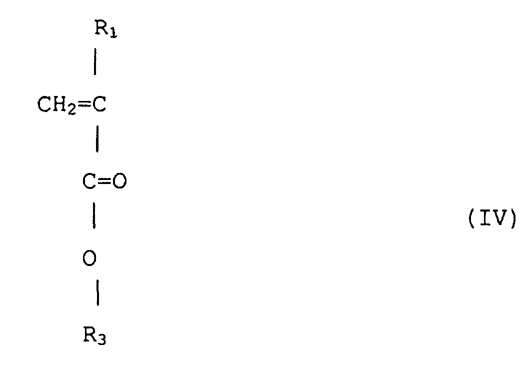 (wobei R₁ Wasserstoff oder Methyl ist, R₃ ist eine wahlfrei substituierte alizyklische Gruppe mit 7 bis 15 Kohlenstoffen oder eine Alkylgruppe mit der alizyklischen Gruppe) mit einem (Meth)acrylsäureester von Formel (V) copolymerisiert wird 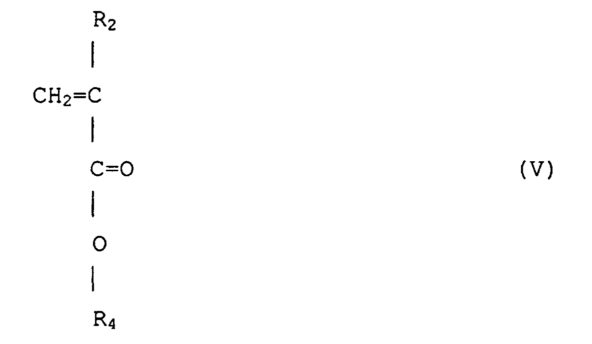 (wobei R₂ jeweils unabhängig Wasserstoff oder Methyl ist, R₄ ist eine wahlfrei substituierte Alkylgruppe mit 1 bis 12 Kohlenstoffen, eine alizyklische oder heterozyklische Gruppe mit 3 bis 6 Kohlenstoffen oder eine substituierte Silylgruppe mit einer Alkyl und/oder Arylgruppe mit 1 bis 8 Kohlenstoffen), durch Anionenpolymerisation unter Verwenden eines Alkalimetalls oder organischen Alkalimetalls als einen Initiator.

8. Verfahren zum Herstellen eines (Meth)acrylsäureestercopolymeren mit enger Polydispersität nach Anspruch 3, wobei ein (Meth)acrylsäureester von Formel (IV) 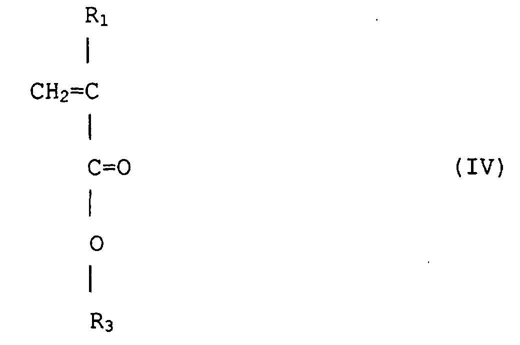 (wobei R₁ Wasserstoff oder Methyl ist, R₃ ist eine wahlfrei substituierte alizyklische Gruppe mit 7 bis 15 Kohlenstoffen oder eine Alkylgruppe mit der alizyklischen Gruppe) mit einem (Meth)acrylsäureester von Formel (V) copolymerisiert wird 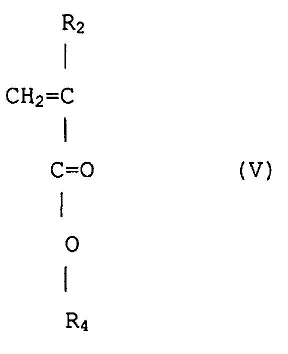 (wobei R₂ Wasserstoff oder Methyl ist, R₄ ist eine wahlfrei substituierte Alkylgruppe mit 1 bis 12 Kohlenstoffen, eine wahlfrei substituierte alizyklische oer heterozyklische Gruppe mit 3 bis 6 Kohlenstoffen oder eine substituierte Silylgruppe mit einer Alkyl und/oder Arylgruppe mit 1 bis 8 Kohlenstoffen), durch Anionenpolymerisation unter Verwenden eines Alkalimetalls oder organischen Alkalimetalls als einen Initiator, gefolgt von der Hydrolyse von Teil oder dem Gesamten von R₄ mit sauren und/oder alkalischen Reagenzien unter Einführen eines (Meth)acrylsäuregerüsts in die Copolymerkette.

## Revendications

1. Copolymère d'ester (méth)acrylique à polydispersité restreinte qui comprend les unités structurelles représentées par les formules (I) et (II) 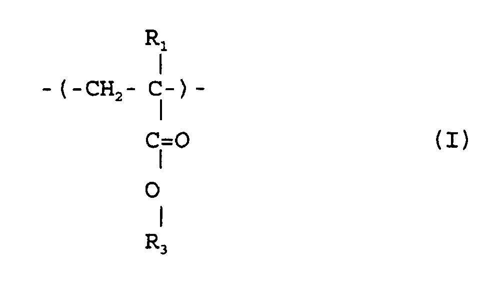 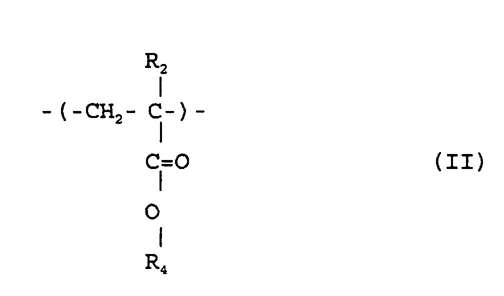 où R₁ et R₂ sont chacun indépendamment de l'hydrogène ou un méthyle; R₃ est un groupe alicyclique facultativement substitué ayant de 7 à 15 atomes de carbone ou un groupe alkyle comprenant ce groupe alicyclique; et R₄ est de l'hydrogène, un groupe alkyle facultativement substitué ayant de 1 à 12 atomes de carbone un groupe alicyclique ou hétérocyclique facultativement substitué ayant de 3 à 6 atomes de carbone ou un groupe silyle substitué ayant un groupe alkyle et/ou aryle de 1 à 8 atomes de carbone, et qui a un poids moléculaire moyen en nombre de 1000 à 50000, un rapport de poids moléculaire moyen en poids (Mw) à poids moléculaire moyen en nombre (Mn), Mw/Mn, de 1,00 à 1,40, et un rapport d'unités structurelles répétées représentées par la formule (I) à celles de la formule (II) de 1/9 à 9/1.

2. Copolymère d'ester (méth)acrylique à polydispersité restreinte selon la revendication 1, qui comprend les unités structurelles représentées par les formules (I) et (II') 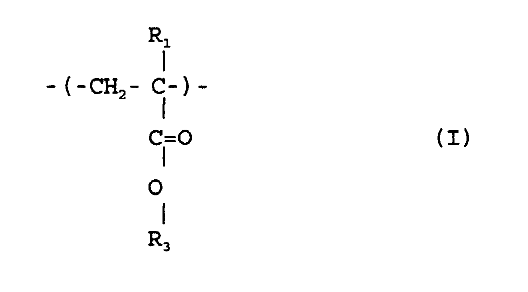 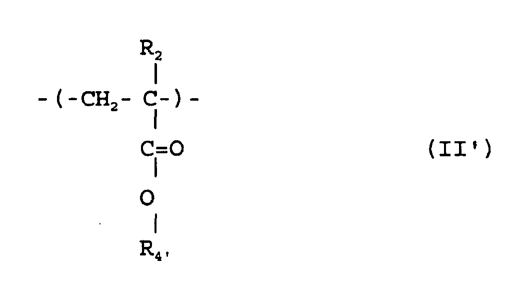 où R₁ et R₂ sont chacun indépendamment de l'hydrogène ou un méthyle; R₃ est un groupe alicyclique facultativement substitué ayant de 7 à 15 atomes de carbone ou un groupe alkyle comprenant ce groupe alicyclique; et R₄ est un groupe alkyle facultativement substitué ayant de 1 à 12 atomes de carbone et un groupe alicyclique ou hétérocyclique facultativement substitué ayant de 3 à 6 atomes de carbone ou un groupe silyle substitué ayant un groupe alkyle et/ou aryle de 1 à 8 atomes de carbone, et qui a un poids moléculaire moyen en nombre de 1000 à 50000, un rapport de poids moléculaire moyen en poids (Mw) à poids moléculaire moyen en nombre (Mn), Mw/Mn, de 1,00 à 1,40, et un rapport d'unités structurelles répétées représentées par la formule (I) à celles de la formule (II') de 1/9 à 9/1.

3. Copolymère d'ester (méth)acrylique à polydispersité restreinte selon la revendication 1, qui comprend les unités structurelles représentées par les formules (I) et (II) et (III) 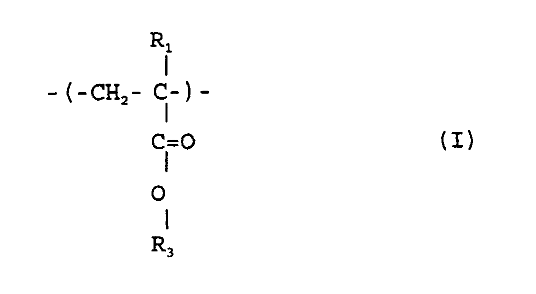 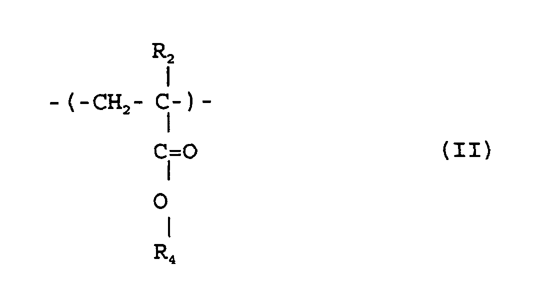 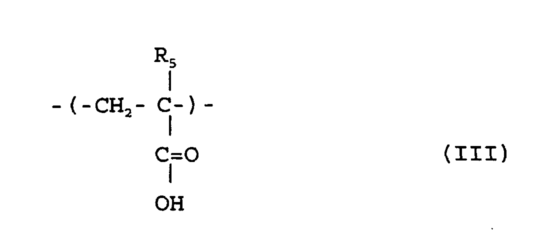 où R₁ R₂ et R₅ sont chacun indépendamment de l'hydrogène ou un méthyle; R₃ est un groupe alicyclique facultativement substitué ayant de 7 à 15 atomes de carbone ou un groupe alkyle comprenant ce groupe alicyclique; et R₄ est de l'hydrogène, un groupe alkyle facultativement substitué ayant de 1 à 12 atomes de carbone, un groupe alicyclique ou hétérocyclique facultativement substitué ayant de 3 à 6 atomes de carbone ou un groupe silyle substitué ayant un groupe alkyle et/ou aryle de 1 à 8 atomes de carbone, et qui a un poids moléculaire moyen en nombre de 1000 à 50000, un rapport de poids moléculaire moyen en poids (Mw) à poids moléculaire moyen en nombre (Mn), Mw/Mn, de 1,00 à 1,40, et un rapport d'unités structurelles répétées représentées par la formule (I) au total de celles des formules (II) et (III) de 1/9 à 9/1.

4. Copolymère d'ester (méth)acrylique à polydispersité restreinte selon les revendications 1 à 3, dans lequel le copolymère est un copolymère aléatoire.

5. Copolymère d'ester (méth)acrylique à polydispersité restreinte selon les revendications 1 à 3, dans lequel le copolymère est un copolymère bloc.

6. Copolymère d'ester (méth)acrylique à polydispersité restreinte selon les revendications 1 à 3, dans lequel le copolymère est un copolymère bloc partiel.

7. Procédé de fabrication d'un copolymère d'ester (méth)acrylique à polydispersité restreinte selon la revendication 2, au cour duquel on copolymèrise un ester (méth)acrylique de la formule (IV) 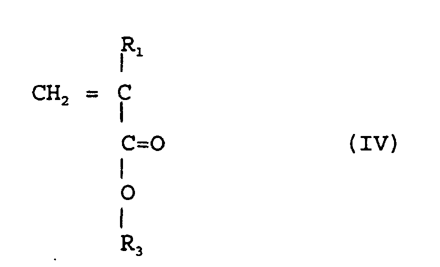 (où R₁ est de l'hydrogène ou méthyle, R₃ est un groupe alicyclique facultativement substitué et ayant de 7 à 15 atomes de carbone ou un groupe alkyle comportant ce groupe alicyclique)
avec un ester (méth)acrylique de la formule (V) 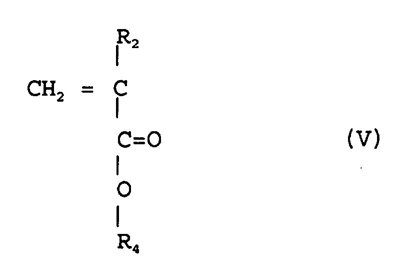 (où R₂ est chacun indépendamment de l'hydrogène ou méthyle, R₄ est un groupe alkyle facultativement substitué ayant de 1 à 12 atomes de carbone, un groupe alicyclique ou hétérocyclique ayant de 3 à 6 atomes de carbone ou un groupe silyle substitué ayant un groupe alkyle et/ou un groupe aryle de 1 à 8 atomes de carbone),
par polymérisation anionique en utilisant un métal alcalin ou un métal alcalin organique comme initiateur.

8. Procédé pour produire un copolymère d'ester (méth)acrylique à polydispersité restreinte selon la revendication 3, où on copolymérise un ester (méth)acrylique de la formule (IV) 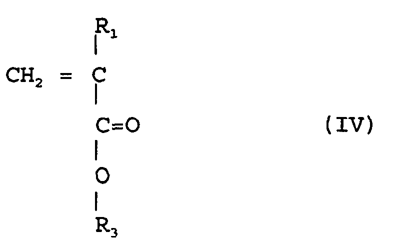 (où R₁ est de l'hydrogène ou méthyle, R₃ est un groupe alicyclique facultativement substitué ayant de 7 à 15 atomes de carbone ou un groupe alkyle comportant ce groupe alicyclique)
avec un ester (méth)acrylique de la formule (V) 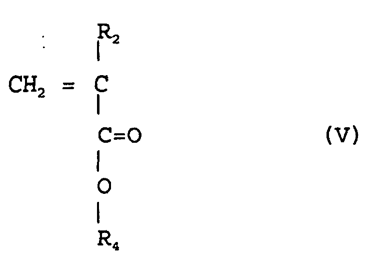 (où R₂ est de l'hydrogène ou méthyle, R₄ est un groupe alkyle facultativement substitué ayant de 1 à 12 atomes de carbone, un groupe alicyclique ou hétérocyclique facultativement substitué ayant de 3 à 6 atomes de carbone ou un groupe silyle substitué ayant un groupe alkyle et/ou un groupe aryle de 1 à 8 atomes de carbone),
par polymérisation anionique en utilisant un métal alcalin ou un métal alcalin organique comme initiateur, suivi par l'hydrolyse d'une partie ou de la totalité de R₄ avec des réactifs acides et/ou alcalins pour introduire un squelette d'acide (méth)acrylique dans la chaîne de copolymère.
